# EUROPÄISCHE PATENTANMELDUNG

(11) **EP 0 597 141 A1**
(43) Veröffentlichungstag der Anmeldung: **18.05.1994**
(21) Anmeldenummer: 92119210.0
(22) Anmeldetag: 10.11.1992
(51) Int. Cl.: B65B 53/06

(54) **Verfahren und Vorrichtung zum Verpacken von gestapelten Gütern auf Paletten**

(71) Anmelder: VfI Gesellschaft für Verpackungstechnik mbH, D-47565 Goch (DE)
(72) Erfinder: Grefrath, Knut, W-4050 Mönchengladbach-Wickrath (DE)
(74) Vertreter: Plöger, Ulrich, Dipl.-Ing.

(57) **Zusammenfassung**

Bei Anlagen für die Schrumpffolienverpackung palettierter Güterstapel ist die erhebliche Menge heißer Gase aufwending und betrieblich sehr störend. Die Erfindung verringert diese Einflüsse dadurch, daß die heißen Gase nach ihrer ersten Berührung mit den zu schrumpfenden Folien (4) aufgefangen werden, um sodann einen Teil ihrer Wärme and die jeweils nächstens, zu schrumpfenden Folienhauben (4) abzugeben. Dabei kommt es zur Absenkung der Gastemperaturen und zur Vorerwärmung der Folien (4). Die Erfindung sieht Kreisläufe mit regenerativen und rekuperativen Wärmeübergängen vor.

## Beschreibung

Die Erfindung bezieht sich auf ein Verfahren der in den Oberbegriffen der Patentansprüche 1 und 2 näher beschriebenen Art. Weiterhin bezieht sich die Erfindung auf eine Vorrichtung zur Durchführung dieses Verfahrens nach dem Oberbegriff des Patentanspruchs 4.

Ein derartiges Verfahren sowie eine derartige Vorrichtung bildet in Deutschland den Gegenstand einer Lieferung seitens der Firma Ahrendt und Birkendahl an die Firma Alcan im Jahre 1979. In diesem Falle ist eine stehende Brennerleiste vorgesehen, wohingegen sich die zu bearbeitende Palette auf einen Drehteller befindet. Bei den Brennern handelt e sich um Brennkammeraufführungen, die ein Heißgas von genügend tiefer Temperatur abgeben, so daß die Folie geschrumpft, nicht jedoch verbrannt wird. Oberhalb der Brennersäule befindet sich eine Auffanghaube, die das aufgefangene, abgekühlte Gasgemisch schräg auf die Mitte der Deckelfläche der zu schrumpfenden Folienhaube gerichtet ist. Das Schrumpfgas wird auf diese Weise zweimal auf die Folienhaube zur Einwirkung gebracht, einmal im Bereich der vertikalen Flächen, und das andere Mal durch Beaufschlagung der Deckelfläche. Schrumpfeinrichtungen dieser Art werden auch noch häufig mit einem unterem zusätzlichen Schrumpfbrenner vorgesehen, so daß der untere Folienrand nach innen geschlagen werden kann, und damit die Möglichkeiten des Festhaltens durch Absetzen der Palette auf ein Flurfördermittel, wie eine Kette gegeben sind. Eine Gasströmung in Form einer Thermik oberhalb des mit Schrumpffolie verpackten Gutstapels kommt hierbei nicht zustande, weil die von der Aufgangshaube des Schrumpfgases aufgefangene Heißgasströmung sich auf dem Deckel der Folienhaube ausbreitet und daher die von unten aufsteigende Heißgasströmung ablenkt.

Vom Prinzip dieser bekannt gewesenen Vorrichtung ausgehend liegt der Erfindung die Aufgabenstellung zugrunde, eine Weiterentwicklung in der Weise vorzunehmen, daß durch den Einsatz strömungstechnischer Mittel das aufsteigende Gasgemisch, mit dem durch Mitreißwirkung aufgenommenen Luftanteil vermischt, in wirtschaftlicher Weise weiterzuverwenden, bevor es in Ermangelung einer hinreichenden Temperatur für eine Weiterverwendung uninteressant wird. Vielmehr soll das Schrumpfgas beim Verlassen der Einrichtung so weit abgekühlt sein, daß auch störende Einwirkungen auf die Umgebung weitgehend herabgesetzt sind.

Erfindungsgemäß wird diese Aufgabenstellung durch die in den Ansprüchen 1 bis 3 vorgeschlagenen Verfahren sowie durch die zu deren Durchführung vorgesehene Vorrichtung gemäß Anspruch 4 und folgenden.

Demnach verwirklicht die Erfindung das vorgesehene Ziel generell durch einen Wärmerückgewinn, der nach Patentanspruch 1 und 3 annähernd rekuperativ verläuft, wohingegen er nach Anspruch 2 annähernd regenerativ abläuft. Die Wärmeübergänge dieser Art lassen sich nach einschlägigen Algorythmen berechnen ohne daß diese als solche zum Gegenstand der Erfindung zählen.

Das Verfahren nach den Ansprüchen 1 und 3 ist an den gleichzeitig vorherigen Betrieb der Schrumpfbrenner gebunden. Es sieht demnach zunächst vor, daß die aufsteigenden Gase durch eine von oben auftreffende, kalte Strömung, und zwar nach deren Umlenkung auf der Deckelfläche der Folienhaube, von letzterer abgeleitet werden. Sie werden alsdann in den Schrumpfbrennern, und zwar zweckmäßigerweise in den Brennkammern, in einem einstellbarfen Anteil zugesetzt, um erneut am gleichen Kreislauf teilzunehmen. Sie ersetzen also einen Teil der Luft, die sonst den Brennkammern zugeführt wird, um - als Ballast - die Temperatur der Beaufschlagung in den Grenzen zu halten, die für das Schrumpfen der Kunststoffe zulässig sind. Der genannte Kreislauf ist teilweise offen, so daß sich die aufsteigenden Gase immer wieder von neuem während ihrer freien Strömungsstrecke mit angrenzender Luft vermischen und somit einen hinreichenden Anteil an kühler Luft aufweisen, um in der Brennkammer der Schrumpfbrenner die notwendige Abkühlungstemperatur zu bilden. Als Ergebnis dieses Kreislaufs wird der Gasverbrauch der Schrumpfbrenner geringer, wenn der Anteil der dort erzeugten Wärme im Kreislauf strömt, während gleichzeitig die aus diesem System ausscheidenen Anteile des Gasgemisches in ihrer Temperatur sehr stark herabgesetzt sind.

Nach Patentanspruch 2 ist die Betriebsweise bei eingestellten Schrumpfbrennern verschieden von derjenigen bei ausgeschalteten Schrumpfbrennern. Im Falle der Einschaltung der Brenner wird das aufsteigende Gasgemisch zu einem erheblichen Anteil innerhalb einer Kammer, die nach unten offen ist, gespeichert. Dabei ergibt dieses Gas zumindest einen erheblichen Anteil seines Wärmeinhaltes an das Speichersystem ab. Der Rest strömt in die Umgebung, und zwar in einen unschädlichen Temperaturbereich, der zuvor seine Abkühlung erfahren hat. In der sich anschließenden Phase bei ausgeschaltetem Brenner wird der Wärmespeicher mittels Gebläseluft entladen, wobei die Entladeströmung auf die Deckelfläche der Folienhaube gerichtet ist. Von hier strömt das Gas weiter den Wandflächen des Gutstapels entlang abwärts, wobei die Folienhaube eine Vorerwärmung erfährt, dank welcher die sich anschließende Folgeschrumpfung durch frühere Abschaltung der Brenner erheblich verkürzt werden kann. Auch bei diesem Verfahren wird ein Anteil der aufgebrachten Menge im Kreislauf geführt, jedoch nicht mehr zu zeitlich gleichbleibenden Bedingungen.

Zur weiergehenden Veranschaulichung der Erfindung wird auf die Zeichnungen Bezug genommen, welche ein Ausführungsbeispiel wiedergeben. Darin zeigen, jeweils in schematischer Ansicht:
Figur 1 eine Anordnung für die rekuperative Betriebsweise,
Figur 2 eine Anordnung für die regenerative Betriebsweise für eine Phase und
Figu 3 eine Anordnung entsprechend Figur 2 für die andere Phase des Betriebes.

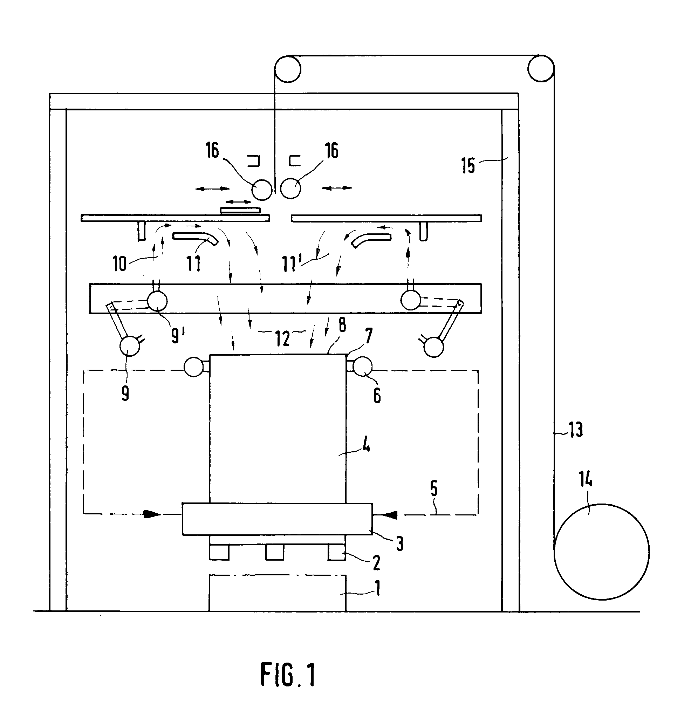

Figur 1 zeigt die Arbeitsbühne 1 für die Aufnahme einer Palette 2. Die Palette ist von einem vertikal verfahrbaren Rahmen 3 umgeben, der die Schrumpfbrenner sowie die Bewegungsbahnen der Greifeinrichtungen für die Fulienhaube 4 trägt. Zusätzlich führt noch eine Verbindung 5 zu den Brennkammern der Brenner, die ein heißes Luft-Gas-Gemisch einspeist. Dieses Luft-Das-Gemisch wird der Ringleitung 6 entnommen, die über die Kante 7 der Deckelfläche 8 vorstehend die Folienhaube 4 umschließt.

Auf der Deckelfläche 8 fließt in radialer Richtung nach außen eine nicht durch Richtungspfeile dargestellte Strömung eines Gemisches aus heißem Gas und Luft, welches die Deckelfläche 8 beaufschlagt und alsdann über deren Kante 7 abströmt. Die Ringleitung 6 fangt mittels Saugwirkung dieses Gasgemisch auf und leitet es, wie vorher beschrieben, weiter.

Eine weitere Strömung, für die gleichfalls Richtungspfeile nicht eingezeichnet sind, steigt oberhalb des Rahmens 3 parallelflächig zu den Wänden 4 der Folienhaube auf, jedoch wird sie vor Erreichen der Oberkante 7 von der dort bestehenden Strömung verwirbelt und von der Umgebungsluft aufgenommen.

Aus der Umgebungsluft werden die Gebläse 9 versorgt, die in ihrer Betriebsstellung 9' die Strömung 10 nach oben blasen. Die Strömmung 10 erfährt dort eine Umlenkung im rechten Winkel, um sich mit der von der anderen Seite herkommenden, symmetrischen Strömung zu einer Vertikalströmung zu vereinigen, die senkrecht auf die Deckelfläche 8 fällt.

Der Folienschlauch 13 wird von der Rolle 14 abgewickelt und zwei Mal umgelenkt, um von oben in die ihn weiter fördernden Mittel einzutreten, wobei er auf Maß gefördert, geschweißt und geschnitten wird, um in den abschließenden Förderwalzen positioniert zu werden, wahrend seine Schweißkanten unter Druck versiegelt werden.

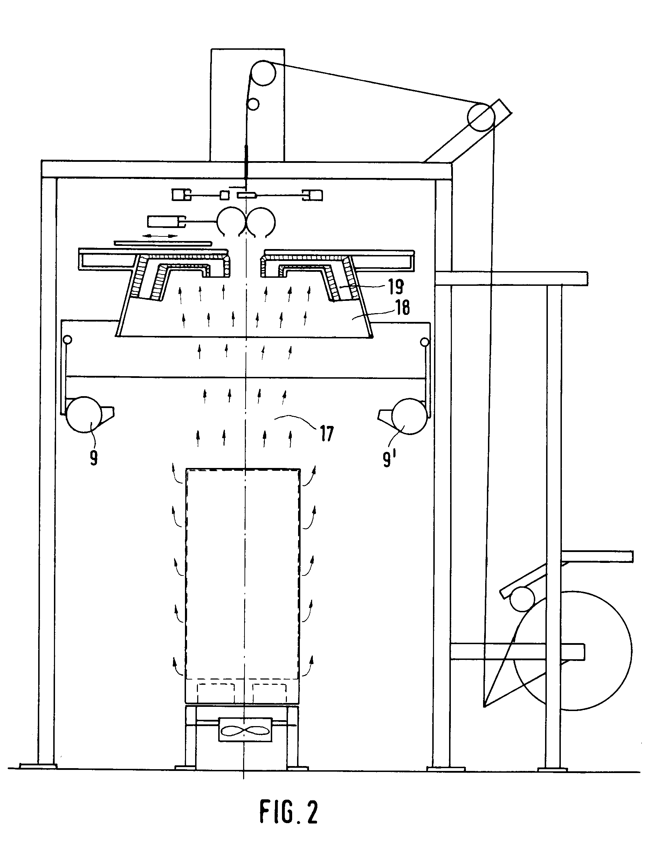

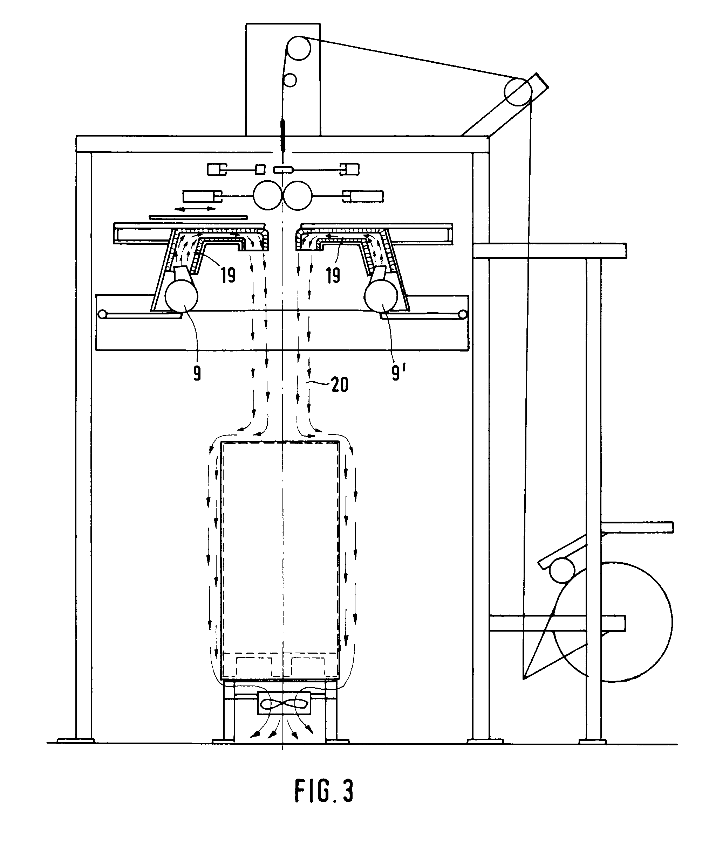

Die Einrichtungen nach den Figuren 2 und 3 stimmen in ihrem wesentlichen Aufbau als Folienschrumpfverpackungs-Einrichtung mit demjenigen überein, wie es in Bezug auf Figur 1 beschrieben wurde. Von bekannten Ausführungen her selbstverständliche Teile sind daher teilweise nicht wiedergegeben, so z.B. die Folienhaube 4. Bei der in Figur 2 wiedergegebenen Phase sind die Brenner eingeschaltet, so daß eine vertikale Aufwärtsströmung 17 aus heißem Gas und mitgenommener Luft besteht. Diese Strömung wird von einer nach unten zu offenen Auffangskammer 18 übernommen, soweit das Volumen dieser Kammer reicht. Diese Auffangkammer ist gleichzeitig ein Wärmespeicher, in welchem ein Teil des Wärmeinhaltes des heißen Gases aufgenommen werden kann. Soweit das Volumen des Wärmespeichers nicht ausreicht, strömt das überschüssige heiße Gas durch einen Kanal 19, der mit wärmespeichernden Mitteln, wie feuerfeste Schaumstoffsteine oder dergl., ausgekleidet ist und zumindest einen Teil der fühlbaren Wäme des Gases zurückhält, so daß letztere in abgekühltem Zustand weiter abströmen können, soweit sie nicht in der Kammer 18 verblieben sind. In der sich anschließenden Phase gemäß Figur 3 sind die Brenner ausgeschaltet. Demgegenüber wurden die Gebläse 9, 9' aus ihrer in Figur 2 wirkungslosen Stellung in ihre Betriebsstellung gemäß Figur 3 gebracht. In dieser Stellung durchströmen die unter Druck stehenden Gase die Kanäle 19, deren Ausgang von nicht dargestellten Düsen mit einer abwärts gerichteten Austrittsströmung gebildet wird. Die Düsen sind auswechselbar, so daß der austretenden Strömung ihre vertikale Abwärtsrichtung 20 und ihre Auftrefflage auf der Deckelfläche 8 der Folienhaube 4 genau eingestellt werden kann.

## Patentansprüche

1. Verfahren zum Verpacken von auf Paletten gestapelten Gütern mittels schrumpffähiger Kunststoffolie, deren Schrumpfprozeß durch Erhitzung ausgelöst wird, und die in Form von Folienhauben mit einseitiger Öffnung über die Verpackungsgüter derart gezogen wird, daß ihre Deckelfläche zuoberst liegt, wohingegen die Bodenseite für das Festhalten der unteren Ränder der Folienhauben ausgeführt ist, wobei die zum Schrumpfen erforderliche Hitze durch Brenner zugeführt wird, deren Flammgase durch Luftbeimischung derart gekühlt werden, daß die austretenden Mischgase für die Erhitzung zum Zwecke des Schrumpfens ausreichend heiß sind, und wobei auf die Deckelfläche der Folienhaube wenigstens zeitweise von oben eine Gasströmung gerichtet wird,
dadurch gekennzeichnet,
daß die Gasströmung in senkrechter Richtung auf die Deckelfläche der aufgespannten Folienhaube fällt, wobei die Strömung aus Düsen austritt, die im Hinblick auf verfügbares Druckgas einerseits und den ihren Abstand von der Deckelfläche andererseits mit der Maßgabe ausgelegt sind, daß die auftreffende Gasströmung parallel zur Deckelfläche sowie an letzterer anliegend abströmt.

2. Verfahren zum Verpacken von auf Paletten gestapelten Gütern mittels schrumpffähiger Kunststoffolie, deren Schrumpfprozeß durch Erhitzung ausgelöst wird, und die in Form von Folienhaube mit einseitiger Öffnung über die Verpackungsgüter derart gezogen wird, daß ihre Deckelfläche zuoberst liegt, wohingegen die Bodenseite für das Festhalten der unteren Ränder der Folienhaube ausgeführt ist, wobei die zum Schrumpfen erforderliche Hitze durch Brenner zugeführt wird, deren Flammgase durch Luftbeimischung derart gekühlt werden, daß die austretenden Mischgase für die Erhitzung zum Zwecke des Schrumpfens ausreichend heiß sind, und wobei auf die Deckelfläche der Folienschlauches wenigstens zeitweise von oben eine Gasströmung gerichtet wird, dadurch gekennzeichnet,
daß das im Palettenbereich aufströmendes Gemisch von Umgebungsluft mit Heißgas nach oben gefördert wird und sodann seitlich eine Strömungsumkehr erfährt, mittels welcher es von oben auf die Deckelfläche der geschrumpften Folienhaube geblasen wird, wobei ein sich zwischen der Deckelfläche der überzogenen Folienhaube und der Gebläseaustrittsdüse befindlicher Wärmespeicher, desen Speichervermögen nach einer Umschaltung durch die Gebläse entleebar ist, so daß die jeweils folgenden Folienhaube in aufgezogenem Zustand eine Vorerhitzung erfahren. (regenerativ)

3. Verfahren nach Anspruch 1,
dadurch gekennzeichnet,
daß das abströmende Gas aufgefangen und in einem entsprechenden Anteil dem von den Schrumpfbrennern erzeugten Beaufschlagungsgemisch zugesetzt wird.(rekuperativ)

4. Vorrichtung zur Durchführung des Verfahrens nach den Ansprüchen 1 bis 3, mit einer Arbeitsbühne (1) für die Aufnahme von Paletten (2), sowie mit einer verfahrbaren Leiste mit Schrumpfbrennern, insbesondere mit einem die Schrumpfbrenner aufnehmenden sowie mit Greifeinrichtungen für die Folienhaube versehenen Rahmen, sowie mit einem die Folienhaube von oberhalb zuführenden Förderer,
dadurch gekennzeichnet,
daß sich oberhalb der in seiner vorgesehenen Betriebsstellung befindlichen Deckelfläche (8) der Folienhaube (4) ein Umlenk- und Düsensystem (11) befindet, das mit Gebläseluft betreibbar und senkrecht auf die Deckelfläche (8) ausgerichtet ist, sowie mit einer das von der Deckelfläche (8) abfließende Gas aufnehmenden und weiterleitenden Einrichtung (5,6).

5. Vorrichtung nach Anspruch 4,
dadurch gekennzeichnet,
daß eine das abströmende Gas weiterleitende Einrichtung (5,6) mit den Schrumpfbrennern in Verbindung steht und durch letztere in Umlauf gehalten ist.
